(19) Europäisches Patentamt
European Patent Office
Office européen des brevets

(11) **EP 3 350 307 B1**

(12) **EUROPÄISCHE PATENTSCHRIFT**

(45) Veröffentlichungstag und Bekanntmachung des Hinweises auf die Patenterteilung:
**24.07.2019 Patentblatt 2019/30**

(21) Anmeldenummer: **16757815.2**

(22) Anmeldetag: **11.08.2016**

(51) Int Cl.:
*C11D 17/00* (2006.01)      *C11D 3/20* (2006.01)
*C11D 3/37* (2006.01)      *C11D 3/43* (2006.01)
*C11D 10/04* (2006.01)      *C09D 9/04* (2006.01)
*C11D 3/04* (2006.01)

(86) Internationale Anmeldenummer:
**PCT/DE2016/000317**

(87) Internationale Veröffentlichungsnummer:
**WO 2017/045659 (23.03.2017 Gazette 2017/12)**

(54) **REINIGUNGSMITTEL AUF MIKROEMULSIONSBASIS**

MICROEMULSION BASED CLEANING COMPOSITION

COMPOSITION DE NETTOYAGE SOUS FORME DE MICROÉMULSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.09.2015 DE 102015011694**

(43) Veröffentlichungstag der Anmeldung:
**25.07.2018 Patentblatt 2018/30**

(73) Patentinhaber: **Forschungszentrum Jülich GmbH 52425 Jülich (DE)**

(72) Erfinder: **ALLGAIER, Jürgen 52066 Aachen (DE)**

(56) Entgegenhaltungen:
WO-A1-2013/139842      DE-A1- 19 824 236
DE-A1-102005 049 765      US-A1- 2008 023 047
US-A1- 2011 190 187

• **COMELLES F ET AL: "SOYBEAN OIL MICROEMULSIONS WITH OLEIC ACID/GLYCOLS AS COSURFACTANTS", JOURNAL OF SURFACTANTS AND DETERGENTS, SPRINGER, BERLIN, DE, Bd. 8, Nr. 3, 1. Juli 2005 (2005-07-01), Seiten 257-262, XP001233098, ISSN: 1097-3958, DOI: 10.1007/S11743-005-0355-1**

**Beschreibung**

Die Erfindung betrifft wässrige Mikroemulsionen, deren Verwendung als Reinigungsmittel, insbesondere zur Entfernung polymerartiger Verschmutzungen, wie beispielsweise Farbreste, sowie ein Verfahren zum Reinigen unter Verwendung der wässrigen Mikroemulsion.

Stand der Technik:

Reinigungsmittel erhalten ihre Wirksamkeit in der Regel dadurch, dass sie speziell auf die zu reinigenden Verschmutzungen konzipiert sind. Ein Reiniger für wasserlösliche Verschmutzungen ist typischerweise wasserbasiert, wohingegen ein Reiniger für ölartige Verschmutzungen typischerweise ölbasiert ist. Ein Reiniger, der gegen beide Verschmutzungsarten wirkt, besteht aus Wasser, einem Öl und mindestens einem Tensid, so dass sich Emulsionen ausbilden können.

Tenside sind waschaktive Substanzen (Detergentien), die in Waschmitteln, Spülmitteln und Shampoos enthalten sind. Sie verfügen über einen charakteristischen Aufbau und weisen mindestens eine hydrophile und eine hydrophobe Struktureinheit auf. Sie weisen einen amphiphilen Charakter auf. Steht der stabilisierende Charakter von Wasser-in-Öl Gemischen im Vordergrund, werden diese amphiphilen Substanzen als Emulgatoren eingesetzt.

Tenside setzen die Grenzflächenspannung zwischen miteinander nicht mischbaren Phasen, einer hydrophilen (wasserlöslichen, lipophoben), meist wässrigen Phase und einer hydrophoben (öllöslichen, lipophilen) Phase herab.

Solche wässrigen Zweiphasengemische werden als Emulsionen bezeichnet.

Konventionelle Emulsionen können hydrophile und hydrophobe Phasen in unterschiedlichen Volumenanteilen enthalten. Sie haben eine kontinuierliche und eine disperse Phase, die als sehr kleine, durch Belegung mit Tensiden stabilisierte Tröpfchen, in der kontinuierlichen Phase vorliegt. Je nach Natur der kontinuierlichen Phase spricht man von Öl-in-Wasser oder Wasser-in-Öl Emulsionen.

Grundsätzlich unterscheidet man zwischen Emulsionen und Mikroemulsionen. Während Mikroemulsionen thermodynamisch stabil sind, trennen sich Emulsionen aufgrund ihrer Instabilität in 2 Phasen. Im mikroskopischen Bereich spiegelt sich dieser Unterschied darin wieder, dass die emulgierten Flüssigkeiten in Mikroemulsionen in der Regel kleinere Strukturgrößen aufweisen, als in Emulsionen, wie in DE 10 2005 049 765 A1 beschrieben. Thermodynamisch instabile Emulsionen weisen somit größere Strukturen auf.

In Mikroemulsionen können lamellare Mesophasen auftreten. Lamellare Mesophasen führen zu optischer Anisotropie und möglicherweise erhöhter Viskosität. Diese Eigenschaften sind z.B. für Reiniger unerwünscht. Außerdem tritt Phasentrennung auf, wenn lamellare Phasen mit Mikroemulsionen coexistieren.

Mikroemulsionen bestehen aus mindestens drei Komponenten, nämlich aus Öl, Wasser und einem Tensid. Das Tensid vermittelt zwischen diesen beiden Komponenten und erlaubt eine makroskopisch-homogene Mischung. Auf mikroskopischer Skala bildet das Tensid einen Film zwischen den Öl- und Wasserdomänen. Öl und Wasser sind nicht mischbar und bilden daher Domänen auf der Nanoskala. Mikroemulsionen sind makroskopisch homogen, verhalten sich optisch isotrop und sind im Gegensatz zu Emulsionen thermodynamisch stabil. Es gibt W/O und O/W-Tröpfchen-Mikroemulsionen, wobei Wassertröpfchen vom Öl oder Öltröpfchen vom Wasser umschlossen sind. Etwa gleiche Anteile von Öl zu Wasser fördern die Bildung einer bikontinuierlichen Mikroemulsion. Charakteristisch für die Effizienz eines Tensids ist die minimal benötigte Tensidmenge, um eine Mikroemulsion zu erhalten.

Mikroemulsionen werden intensiv im Bereich der Grundlagenwissenschaft untersucht. Die dabei erhaltenen Erkenntnisse beruhen weitgehend auf der Verwendung von reinen, definierten Komponenten: deionisiertes Wasser, chemisch reine Öle und Reintenside. Bei technischen Mikroemulsionen bestehen die Komponenten in der Regel aus Stoffgemischen. Dadurch ändert sich das Phasenverhältnis beträchtlich und die in vereinfachten Modellen gewonnenen Erkenntnisse aus der Grundlagenforschung können nicht ohne weiteres auf technische Anwendungen übertragen werden. Eine weitere Schwierigkeit liegt in der geringen Temperaturstabilität von Mikroemulsionen, da in Praxistauglichen Formulierungen die Stabilität über einen breiten Temperaturbereich hinweg gegeben sein muss, um die sichere Lagerung, den Transport und die Anwendung sicher zu gewährleisten. Besonders Systeme auf Basis der vielfach verwendeten Fettalkoholethoxylate sind nur in einem sehr engen Temperaturfenster von wenigen Grad Celsius stabil bzw. müssen extrem hohe Tensidkonzentrationen aufweisen, um über größere Temperaturbereiche stabil zu sein. Hingegen können Mikroemulsionen, die mit Hilfe von Zuckertensiden hergestellt werden, über größere Temperaturbereiche stabil sein (WO 2008/132202 A1). Ganz ähnlich können auch Gemische aus nicht ionischen und ionischen Tensiden herangezogen werden. Hier macht man sich das komplementäre Temperaturverhalten der nichtionischen und ionischen Tenside zu Nutze. Allerdings ist die Entwicklung von Mikroemulsionen, die empfindlich auf die Einstellung ihrer Parameter reagieren können, und die gleichzeitig stabil als auch eine hohe Reinigungsleistung, insbesondere im Hinblick auf in Wasser unlöslichen oder nur sehr schwer löslichen Stoffen, eine besondere Herausforderung.

Zugleich spielen Umweltaspekte und Gesundheitsaspekte eine immer größere Rolle, so dass Wert darauf gelegt wird, Tenside zu verwenden, die ein geringes Gefahrstoffpotential beinhalten. Für technische Anwendungen kann dies von großer Bedeutung sein, da in konventionellen Mikroemulsionen Tensidgehalte von 20 bis 30 % die Regel sind, um eine hinreichend ausgedehnte Temperaturstabilität zu erreichen. In solchen Konzentrationen besitzen Tenside ein nicht zu vernachlässigendes Gefahrpotential.

Konventionelle Reiniger, die im gewerblichen und privaten Bereich, z.B. als Pinselreiniger oder Klebstoffentferner verwendet werden, bestehen im Wesentlichen aus niedersiedenden Gemischen von aliphatischen und aromatischen Kohlenwasserstoffen oder anderen organischen Lösemitteln, denen oft Tenside beigemischt werden. Diese Reiniger sind im hohen Maß gesundheitsschädlich und umweltschädlich. Darüber hinaus sind konventionelle Reiniger häufig stark alkalisch, was die zu reinigenden Substrate angreifen kann.

Darüber hinaus wirken konventionelle Reiniger bei Kontakt mit der Haut stark entfettend und weisen zudem einen starken Geruch auf.

Im Stand der Technik sind bereits technisch einsetzbare Mikroemulsionen bekannt. So beschreibt DE 10 2005 049 765 allgemein ein Verfahren zur Reinigung mit Mikroemulsionen mittels hydrophiler polymerer Additive.

US 6,165,962 beschreibt Mikroemulsionen, die Natriumsalze von Sulfobernsteinsäureestern, $C_2$-$C_{10}$ Diole und Öl enthalten. Die Ölkomponente kann ein Ester sein. Die Mikroemulsionen können weitere Lösemittel enthalten und eignen sich als Reiniger zum Entfetten oder Abbeizen von Farben.

US 2009/0093390, US 7,018,969, US 2005/0130869 und WO 2006/004721 beschreiben Mikroemulsionsformulierungen zum Reinigen harter Oberflächen, die neben Esterölen noch polare Lösungsmittel sowie Tenside und Cotenside enthalten.

US 2004/0038847 und WO 00/52128 beschreiben Mikroemulsionen zur Reinigung harter Oberflächen, die neben Esterölen noch polare Lösungsmittel enthalten und als tensidische Komponente anionische Tenside.

EP 1 780 259 beschreibt Mikroemulsionen zur Reinigung harter Oberflächen, die neben Dibasicestern noch polare Lösungsmittel enthalten sowie anionische Tenside.

WO 2013/139842 A1 offenbart ein weiteres Reinigungsmittel auf Basis einer Mikroemulsion.

Die im Stand der Technik beschriebenen Mikroemulsionen auf Basis von Esterölen benötigen zur Stabilisierung der Mikroemulsion bzw. zur Erzielung der Reinigungsleistung weitere Lösemittel und sind somit in der Regel nach derzeitiger deutscher Gesetzeslage nicht kennzeichnungsfrei. Die Kennzeichnungspflicht hat sich nach Inkrafttreten derCLP-Verordnung noch verschärft.

Aufgabe der Erfindung:

Aufgabe der vorliegenden Erfindung war es, umweltfreundliche und hautfreundliche Mikroemulsionen zur Verfügung zu stellen, die über einen großen Temperaturbereich stabil sind, eine geringe Tensidmenge aufweisen und die zudem eine hervorragende Reinigungsleistung aufweisen, insbesondere im Hinblick auf Farbanschmutzungen, ölartige und fettartige Anschmutzungen und Verschmutzungen, deren organische Bestandteile polymerbasiert sind und besonders bevorzugt kennzeichnungsfrei sind nach derzeitiger Gesetzgebung.

Aufgabe der vorliegenden Erfindung war es ferner, die im Stand der Technik aufgezeigten Probleme zu beheben.

Lösung der Aufgabe:

Es hat sich überraschend gezeigt, dass die Aufgaben der Erfindung durch eine spezielle Mikroemulsion gelöst werden kann.

Beschreibung der Erfindung:

Gegenstand der vorliegenden Erfindung ist eine wässrige Mikroemulsion gemäss Anspruch 1.

Die Reinigungsleistungen der erfindungsgemäßen Mikroemulsionen sind im Wesentlichen gleich, wie die der Lösemittel basierten Reiniger. Die erfindungsgemäßen Mikroemulsionen weisen jedoch darüber hinaus ein breiteres Anwendungsspektrum auf. Sie eignen sich beispielsweise zum Entfernen frischer oder getrockneter wasserbasierter Farben. Solche Farben werden normalerweise mit Wasser entfernt, was aber zu Harzrückständen oder Rückständen von angetrockneter Farbe führen kann. Harzrückstände können z.B. Pinselhaare verkleben. Die erfindungsgemäßen Mikroemulsionen eignen sich auch zum Entfernen wasserlöslicher Farben, ohne Harzrückstände zu hinterlassen. Angetrocknete Farbe wird entfernt, was mit Wasser nicht möglich ist. Konventionelle Pinselreiniger eignen sich nur zum Abreinigen von Lösemittel basierten Farben, für Wasser basierte Farben eignen sie sich nicht. Die erfindungsgemäßen Mikroemulsionen sind weiterhin vorteilhaft, wenn lange Einwirkzeiten notwendig sind, z.B. um getrocknete Verschmutzungen zu entfernen. Konventionelle Reiniger sind hier nicht geeignet, da die organischen Lösemittel schnell verdampfen.

Darüber hinaus hat sich gezeigt, dass die erfindungsgemäßen Mikroemulsionen gut mit Wasser verdünnbar sind unter Beibehalt ihrer Eigenschaft als Mikroemulsion. Dadurch können Sie bei leichter entfernbaren Verschmutzungen, wasserverdünnt eingesetzt werden. Außerdem lassen sich Reinigerrückstände leicht mit Wasser entfernen.

Darüber hinaus wurde überraschend festgestellt, dass die erfindungsgemäßen Mikroemulsionen im Gegensatz zu konventionellen Reinigern sowie Reinigern nach dem Stand der Technik nach dem Inkontaktbringen mit der Haut und nach dem Abwaschen, ein angenehmes Gefühl auf der Haut hinterlassen. Darüber hinaus sind die erfindungsgemäßen Mikroemulsionen im Wesentlichen geruchsneutral.

Die erfindungsgemäßen Mikroemulsionen zeichnen sich auch dadurch aus, dass sie lediglich eine geringe Tensidmenge benötigen und in einem größeren Temperaturbereich stabil sind. In einer bevorzugten Ausführungsform ist die erfindungsgemäße Mikroemulsion im Wesentlichen frei von flüchtigen organischen Verbindungen (so genannten volatile organic compounds, VOC). Als VOC ist nach der 31. Verordnung der Durchführung des Bundesemissionsschutzgesetzes (31. BimschV, § 2, Nr. 11) eine flüchtige organische Verbindung anzusehen, die bei 293,15 K einen Dampfdruck von 0,01 kPa oder mehr hat. Zu den VOC zählen z.B. Verbindungen der Stoffgruppen Alkane/Alkene, Aromaten, Terpene, Halogenkohlenwasserstoffe, Äther, Ester, Aldehyde und Ketone.

Vorzugsweise ist die Mikroemulsion der vorliegenden Erfindung im Wesentlichen frei von organischen Lösungsmitteln, insbesondere VOC. Im Wesentlichen frei im Rahmen der vorliegenden Erfindung bedeutet, dass die Mikroemulsion weniger als 10 Gew.-%, vorzugsweise weniger als 5 Gew.-%, weiter bevorzugt weniger als 2 Gew.-%, mehr bevorzugt weniger als 1 Gew.-%, insbesondere weniger als 0,5 Gew.-%, und im Speziellen vollständig frei ist.

Die wässrige erfindungsgemäße Mikroemulsion umfasst als wesentliche Komponenten die Komponenten a) bis g).

Komponente a)

Die erfindungsgemäße wässrige Mikroemulsion umfasst als Komponente a) ein oder mehrere flüssige Carbonsäureester, die nachfolgend auch als "Esteröle" bezeichnet werden. Das Esteröl bildet die Ölkomponente in der Mikroemulsion. Esteröle haben den Vorteil, dass sie unpolar sind und einen lipophilen Charakter aufweisen, was sie besonders gut für ölartige Verschmutzungen und insbesondere auch für Verschmutzungen, deren organische Bestandteile polymerbasiert sind, eignet. Darüber hinaus weisen sie einen hohen Siedepunkt auf und sind daher schwerflüchtig. Geeignete flüssige Carbonsäureester haben einen Schmelzpunkt, der unterhalb von 20°C liegt, d.h. die flüssigen Carbonsäureester sind bei 20°C flüssig.

Die Carbonsäureester weisen 6 bis 22 Kohlenstoffatome, insbesondere 10 bis 22 Kohlenstoffatome auf.

Das Esteröl kann gesättigte, ungesättigte oder aromatische Reste enthalten.

Besonders bevorzugt sind flüssige Carbonsäureester, ausgewählt aus der Gruppe bestehend aus Ester aus einwertigem Alkohol und Mono- oder Dicarbonsäure und Ester aus zweiwertigem Alkohol und Monocarbonsäure.

Insbesondere bevorzugt sind die Ester einwertiger Alkohole mit Monocarbonsäuren. Gute Ergebnisse konnten erzielt werden mit flüssigen Carbonsäureestern, wobei der Ester aus einer $C_{10}$-$C_{22}$ Monocarbonsäure und

Methanol, vorzugsweise Dodecansäuremethylester oder Rapsölmethylester ist.

Weiterhin bevorzugt sind flüssige Carbonsäureester, die eine Mischung aus Monocarbonsäuren mit 10 bis 22 Kohlenstoffatomen und Dicarbonsäuremethylester mit 6 bis 10 Kohlenstoffatomen aufweisen.

In einer besonders bevorzugten Ausführungsform weist das Esteröl ein oder mehrere Komponenten, ausgewählt aus der Gruppe bestehend aus Rapsölmethylester, Octyloctanoat, Ölsäureethylester, Methyllaurat, Dimethylsuccinat, Dimethyladipat, Dimethylglutarat und Isopropylmyristat auf.

In einer bevorzugten Ausführungsform weisen die wässrigen Mikroemulsionen der vorliegenden Erfindung den flüssigen Carbonsäureester in einer Menge von 10 bis 50 Gew.-%, vorzugsweise 20 bis 35 Gew.-%, jeweils bezogen auf das Gesamtgewicht der Mikroemulsion, auf.

Um eine ausbalancierte, auf die weiteren Komponenten eingestellte und hochleistungsfähige Mikroemulsion zu erhalten, hat es sich als vorteilhaft herausgestellt, das Gewichtsverhältnis des flüssigen Carbonsäureester (Komponente a)) zur Summe der Komponenten c), d) und e) und gegebenenfalls weiterer Komponenten, wie beispielsweise optionaler Tenside auf 1,5 bis 10, bevorzugt 2,5 bis 8, insbesondere 3 bis 8 oder 4 bis 8, insbesondere 4,1, 4,2, 4,3, 4,4, 4,5, 4,6, 4,7, 4,8, 4,9, 5,0, 5,1, 5,2, 5,3, 5,4, 5,5, 5,6, 5,7, 5,8, 5,9, 6,0, 6,1, 6,2, 6,3, 6,4, 6,5, 6,6, 6,7, 6,8, 6,9, 7,0, 7,1, 7,2, 7,3, 7,4, 7,5, 7,6, 7,7, 7,8, 7,9 oder 8,0 einzustellen, wobei jeder Zwischenwert eingestellt werden kann.

Komponente b)

Die erfindungsgemäßen wässrigen Mikroemulsionen weisen als Komponente b) ein oder mehrere wasserlösliche(s) Salz(e) mit einem oder mehreren Kationen, vorzugsweise ausgewählt aus der Gruppe bestehend aus Natrium, Kalium, Calcium, Magnesium und Ammonium auf.

Im Rahmen der vorliegenden Erfindung sind Salze wasserlöslich, wenn mindestens 1 g Salz pro Liter Wasser bei 20°C vollständig gelöst werden kann. Bevorzugt sind die Alkali- oder Erdalkali- oder Ammoniumsalze.

Es wurde gefunden, dass durch geeignete Auswahl der Salze die Bildung der Mikroemulsion und deren Temperaturstabilitätsfenster gesteuert werden kann. Ohne das Vorliegen von Salz ist entweder ein sehr großer Anteil an Tensid in der Emulsion notwendig oder die Mikroemulsion ist in einem für die Anmeldung irrelevanten Temperaturbereich stabil. Durch den Einsatz des Salzes lässt sich daher vorteilhaft die Tensidmenge verringern, was neben den Umweltvorteilen auch Kostenvorteile mit sich bringt. Dabei ist die Tensidmenge wiederum ein Balanceakt, weil mit einer größeren Tensidmenge auch der Temperaturbereich, in dem die Mikroemulsion stabil ist, breiter wird.

Als Gegenionen sind sowohl anorganische als auch organische Anionen geeignet. Bevorzugte anorganische Anionen sind dabei ausgewählt aus der Gruppe bestehen aus Sulfat, Chlorid, Hydrogensulfat, Phosphat und Hydrogensulfat.

Bevorzugte organische Anionen sind ausgewählt aus der Gruppe bestehend aus Acetat, Gluconat, Citrat und Tartrat.

In einer besonders bevorzugten Ausführungsform der vorliegenden Erfindung ist die Komponente b) ein wasserlösliches Salz, ausgewählt aus der Gruppe bestehend aus Natriumsulfat, Natriumchlorid, Natriumgluconat, Natriumcitrat, Trinatriumphosphat, Dinatriumhydrogenphosphat, Kaliumsulfat, Kaliumchlorid, Ammoniumsulfat, Ammoniumchlorid, Magnesiumsulfat, Magnesiumchlorid, Calciumchlorid, Calciumacetat, Magnesiumacetat und Kaliumnatriumtartrat.

Überraschend gute Ergebnisse konnten mit Acetatsalzen erzielt werden. In einer besonders bevorzugten Ausführungsform weisen die erfindungsgemäßen Mikroemulsionen Calciumacetat und/oder Magnesiumacetat auf.

Zur Einstellung des Temperaturfensters und zur Optimierung der Reinigungsleistung der erfindungsgemäßen Mikroemulsion, liegt das Salz in einer Menge von 0,1 bis 4 Gew.-%, vorzugsweise 0,25 bis 3 Gew.-%, jeweils bezogen auf das Gesamtgewicht der Mikroemulsion vor.

Komponente c)

Salz einer Monocarbonsäure und Mischungen von Monocarbonsäuresalzen. Besonders C6 bis C20 Monocarbonsäuren, insbesondere C10 bis C18 Monocarbonsäuren; besonders C14 bis C18, besonders vorteilhaft C16 bis C18, insbesondere mit den entsprechenden ungesättigten Fettsäuren, wie z. B. Ölsäure kommen in Betracht.

Als Kationen sind besonders Alkalimetalle, besonders Natrium, Kalium vorhanden.
mit Cn= Anzahl der Kohlenstoffatome im Molekül.

Erfindungsgemäß sind die Komponenten b) und c) verschieden.

Komponente d)

Monocarbonsäure und Mischungen von Monocarbonsäuren.

Besonders C6 bis C20 Monocarbonsäuren, insbesondere C10 bis C18 Monocarbonsäure; besonders C14 bis C18, besonders vorteilhaft C16 bis C18, insbesondere mit den entsprechenden ungesättigten Fettsäuren wie z. B. Ölsäure kommen in Betracht.
mit Cn= Anzahl der Kohlenstoffatome im Molekül

Komponente e)

Als weitere Komponente e) enthalten die erfindungsgemäßen wässrigen Mikroemulsionen einen oder mehrere Booster gemäss Anspruch 1.

Die eingesetzten Booster dienen der Steigerung der Tensideffizienz in den erfindungsgemäßen Mikroemulsionen. Darüber hinaus tragen die Booster dazu bei, den Temperaturbereich, in dem die Mikroemulsionen stabil sind, zu vergrößern. Die Booster der vorliegenden Erfindung sind regelmäßig derart ausgestaltet, dass sie die Stabilität der Mikroemulsionen erhöhen, indem die Grenzfläche versteift wird.

Erfindungsgemäß werden Booster eingesetzt, welche aus mindestens einer wasserlöslichen Einheit bestehen, die mindestens an einem Kettenende mindestens eine hydrophobe Einheit besitzt und/oder eine hydrophobe Einheit als nicht-terminalen Substituenten besitzt und/oder mindestens eine hydrophobe Einheit besitzen, welche zwischen den wasserlöslichen Einheiten des Polymers eingebaut ist.

Der Booster liegt typischerweise in Form eines Polymers vor. Im gesamten polymeren Booster überwiegt der hydrophile Charakter. Auf Grund der hydrophoben Einheit oder Einheiten bilden die Polymere in Wasser bevorzugt Mizellen. Geeignete Booster sind beispielsweise in der DE 198 39 054 und DE 10 2005 049 765 beschrieben.

Die wasserlösliche Einheit des Boosters ist in ihrer Ausgestaltung nicht auf bestimmte Strukturtypen begrenzt, vielmehr kommt es erfindungsgemäß auf die Kombination der größeren wasserlöslichen Einheit mit der oder den hydrophoben Einheiten an.

Die wasserlösliche Einheit des Polymers ist vorzugsweise linear, es sind aber auch sternförmige, verzweigte oder andere Strukturtypen möglich. Unter linear wird bei Polymeren verstanden, dass die Atome, die das Rückgrat der Kette bilden eine lineare Einheit darstellen.

Die wasserlösliche Einheit kann nichtionisch oder ionisch, das heißt, ein Polyelektrolyt, sein. Die elektrischen Ladungen können sich an jedem Teil der wasserlöslichen Komponente des Polymers befinden. Es sind auch Strukturen denkbar, welche sich aus mindestens einem ionischen und einem nichtionischen Anteil zusammensetzen.

Beispielhaft, aber nicht beschränkend können die wasserlöslichen Einheiten aus folgenden Monomeren oder deren Mischungen von mindestens zwei Komponenten bestehen: Ethylenoxid, Vinylpyrrolidin, Acrylsäure, Methacrylsäure und Maleinsäureanhydrid.

Der wasserlösliche Teil des polymeren Additivs ist bevorzugt ein Polyethylenoxid oder Polyethylenglykol. Weitere Beispiele sind Copolymerisate aus Ethylenoxid und Propylenoxid, Polyvinylalkohol und dessen wasserlösliche Derivate. Außerdem eignen sich Polyvinylpyrrolidon, Polyvinylpyridin, Polymaleinsäureanhydrid, Polymaleinsäure, Polyacrylsäure, Polymethacrylsäure, Polystyrolsulfonsäure und deren wasserlösliche Salze.

Die wasserlöslichen Einheiten sind vorzugsweise linear.

Die Molekulargewichtsverteilung der wasserlöslichen Einheit, definiert durch das Verhältnis des gewichtmittleren Molekulargewichts und des zahlenmittleren Molekulargewichts, beträgt bevorzugt ≤ 1,2.

Das zahlenmittlere Molekulargewicht der wasserlöslichen Einheit des polymeren Additivs liegt vorzugsweise zwischen 500 und 20.000 g/mol, besser 1000 bis 7.000 g/mol, oder zwischen 1300 und 5000 g/mol.

Bevorzugt ist ein lineares, wasserlösliches Polymer, das an einem Kettenende eine hydrophobe Gruppe trägt.

In ähnlicher Weise wie für den wasserlöslichen Teil des polymeren Additivs, ist die Ausgestaltung der hydrophoben Einheit nicht auf ausgewählte Strukturtypen beschränkt. Vielmehr kommt es auch hier lediglich auf die hydrophoben bzw. nicht wasserlöslichen Eigenschaften dieser Einheit an.

Bevorzugte Molekülgrößen für die hydrophobe Einheit liegen bei 80 bis 1000 g/mol, besonders bevorzugt 110-500 g/mol, insbesondere bevorzugt 110 bis 280 g/mol.

Die hydrophoben Einheiten bestehen aus nicht wasserlöslichen Resten. Dabei handelt es sich bevorzugt um Alkylreste, die bevorzugt zwischen 6 und 50 Kohlenstoffatome, besonders bevorzugt zwischen 8 und 20 Kohlenstoffatome enthalten. Die Reste können auch aromatische Gruppen oder Kohlenstoff - Doppel- oder Dreifachbindungen enthalten, sie können linear oder verzweigt sein. Außer Kohlenwasstoffresten sind auch beliebige andere hydrophobe organische Reste verwendbar, die beispielsweise Sauerstoff, Stickstoff, Fluor oder Siliciumatome enthalten. Die hydrophobe Einheit kann auch ein Polymerisat sein.

Die hydrophobe Einheit kann ein Rest mit definierter Struktur und Molekulargewicht sein, wie beispielsweise Alkylreste. Auch Stoffgemische, wie sie beispielsweise in technischen Produkten vorkommen, sind möglich. Es kann sich aber auch um einen polymeren Rest handeln, wie Polybutylenoxid.

Die wasserlösliche Einheit des Polymers trägt an mindestens einem Kettenende eine hydrophobe Einheit.

An jedem Kettenende sind auch mehr als eine hydrophobe Einheit möglich.

Die wasserlösliche Einheit des Polymers kann eine hydrophobe Einheit in einer Nicht-Kettenend-Position tragen.

Weiterhin können hydrophobe Einheiten des polymeren Boosters an mindestens einer Stelle zwischen die wasserlöslichen Einheiten eingebaut sein, so dass die wasserlöslichen Einheiten des Polymers durch hydrophobe Einheiten unterbrochen werden.

Es sind alle Kombinationen der angeführten Strukturtypen möglich.

Das Verhältnis der Molekulargewichte von wasserlöslichem Teil zu hydrophobem Teil beträgt typischerweise 3-300, vorzugsweise 5-200, besonders bevorzugt 5-50.

In der bevorzugten Form ist die wasserlösliche Einheit des Boosters ein lineares Polymer und trägt an einem Kettenende eine hydrophobe Einheit.

Beispielhaft können folgende polymere Booster aufgeführt werden:

- durch Ethoxylierung von $C_8$-$C_{20}$ - Alkoholen erhaltene Alkylethoxylate,
- durch Ethoxylierung von $C_{10}$-$C_{20}$ 1,2-Diolen erhaltene Alkylethoxylate,
- durch Ethoxylierung von $C_8$-$C_{20}$ a, ω-Diole erhaltene Alkylethoxylate,
- an beiden Kettenenden hydrophob modifiziertes Polyethylenglokol, das z.B. durch Umsetzung von Polyethylenglykol mit $C_8$-$C_{20}$ Isocyanaten oder $C_8$-$C_{20}$-Säurechloriden erhalten werden kann,
- AB Diblockcopolymere, ABA oder BAB Triblockcopolymere aus 1,2 Butylenoxid und Ethylenoxid.

Insbesondere wirksam und gleichzeitig biologisch abbaubar sind die durch Ethoxylierung von $C_8$-$C_{20}$-Alkoholen erhaltenen Alkylethoxylate.

Aufgrund der hydrophoben Einheiten bilden die Booster in Wasser bevorzugt Mizellen.

In einer Ausführungsform befindet sich an jeweils beiden Enden der wasserlöslichen Einheit eine hydrophobe Einheit.

Als erfindungsgemäße Booster werden lineare wasserlösliche Polymere, die nur an einem Kettenende eine hydrophobe Einheit tragen, bevorzugt. Innerhalb dieses Strukturtyps werden Alkoholethoxylate bevorzugt, die einen hohen Ethoxylierungsgrad besitzen. Diese Substanzen können als Polyethylenoxid mit einem hydrophoben Alkylrest betrachtet werden oder als langkettige oder hydrophile Emulgatoren angesehen werden. Als hydrophobe Komponenten können beispielsweise aliphatische Alkohole oder Alkylphenole verwendet werden, die bevorzugt 8-20 Kohlenstoffatome besitzen. Die Alkoholethoxylate enthalten pro Mol Alkohol bevorzugt 25 bis 500 Mol, besonders bevorzugt 50-200 Mol Ethylenoxid. Ein Beispiel ist die kommerziell erhältliche Verbindung Brij S 100-PA (SG) der Firma Croda.

Im polymeren Booster sollte der Anteil der wasserlöslichen Einheiten die nicht mit hydrophoben Einheiten verknüpft sind, möglichst gering sein, das heißt beispielsweise ≤ 20 Gew.%.

In einer bevorzugten Ausführungsform liegt der Booster in Form eines hydrophilen polymeren Additivs, bestehend aus einer wasserlöslichen Einheit, die an einem Kettenende eine hydrophobe, wasserunlösliche Gruppe mit einem Molekulargewicht von 80 bis 500 g/mol besitzt und wobei vorzugsweise das Massenverhältnis der wasserlöslichen Einheit zu den hydrophoben, wasserunlöslichen Gruppen 5 bis 200 beträgt. In einer Ausführungsform besteht der Booster aus einem linearen, wasserlöslichen Polymer, welches an einem Kettenende eine hydrophobe, wasserunlösliche Gruppe trägt. Die hydrophobe, wasserunlösliche Gruppe hat bevorzugt ein Molekulargewicht von 110 bis 500 g/mol und besonders bevorzugt ein Molekulargewicht von 110 bis 280 g/mol. Das Molmassenverhältnis der wasserlöslichen Einheit zu den hydrophoben wasserunlöslichen Gruppen beträgt bevorzugt 5 bis 50.

In einer besonders bevorzugten Ausführungsform besteht der Booster aus einem Alkoholethoxylat aus einem $C_8$-$C_{20}$-Alkohol mit 25 bis 500 Ethoxygruppen, vorzugsweise 50 bis 200 Ethoxygruppen.

In einer weiteren bevorzugten Ausführungsform liegt der Booster in einer Menge von 3 bis 20 Gew.-%, bevorzugt 5 bis 15 Gew.-%, insbesondere 7 bis 15 Gew.-%, jeweils bezogen auf das Gesamtgewicht der Komponenten c), d) und e), und gegebenenfalls weiterer Komponenten vor, wie z. B. den zusätzlichen tensidischen Komponenten f) und/oder g).

Die erfindungsgemäßen wässrigen Mikroemulsionen weisen in die Komponenten c) + d) + e) in einer Menge von 2 bis 20 Gew.-%, bevorzugt 3 bis 15 Gew.-%, weiter bevorzugt 3 bis 10 Gew.-% und insbesondere 3 bis 8 Gew.-% oder 4 bis 8 Gew.-%, jeweils bezogen auf das Gesamtgewicht der Mikroemulsion, auf.

Das Massenverhältnis von Monocarbonsäuresalz, insbesondere Fettsäuresalz c) zu Monocarbonsäure, insbesondere Fettsäure d) liegt vorzugsweise zwischen 0,1 und 10, insbesondere 0,4 bis 5, insbesondere zwischen 1,0 und 3,0 und besonders vorteilhaft bei 0,8 0,9, 1,0, 1,1....und 3,8, 3,9, 4,0 wobei jeder Zwischenwert angenommen werden kann

Komponente f)

Als weitere wesentliche Komponente f) enthalten die erfindungsgemäßen Mikroemulsionen ein oder mehrere nicht ionische Tensid(e).

ausgewählt aus ethoxyliertem Sorbitanester und/oder ethoxyliertem Pflanzenöl.

Bevorzugte Sorbitanester sind die Sorbitanmonoester, insbesondere solche Sorbitanmonoester, die einen gesättigten oder ungesättigten, linearen oder verzweigten Fettsäurerest aufweisen.

Einsetzbar sind ethoxylierte Sorbitanester. Besonders bevorzugt sind allerdings ethoxylierte Sorbitanester, die durchschnittlich mit 3 bis 30, vorzugsweise 4 bis 20 Ethoxylatgruppen versehen sind.

In einer bevorzugten Ausführungsform ist das nichtionische Tensid ein ethoxylierter Sorbitanmonoester mit einem gesättigten oder ungesättigten $C_{12}$-$C_{18}$-Fettsäurerest.

In einer weiteren Ausführungsform ist das nichtionische Tensid ein ethoxyliertes Rizinusöl.

In einer bevorzugten Ausführungsform der vorliegenden Erfindung ist der Ethoxylierungsgrad des ethoxylierten Sorbitanesters und/oder des ethoxylierten Pflanzenöls so eingestellt, dass der HLB-Wert von 11 bis 17, besonders bevorzugt 12 bis 16 oder 13 bis 16 ist.

Der HLB-Wert wird nach Griffin wie folgt berechnet:

$$HLB = 20 \cdot M_h/M,$$

wobei

$M_h$ = Molmasse des hydrophilen Anteils eines Moleküls und
$M$ = Molmasse des gesamten Moleküls ist.

(Griffin, W.C. Classification of Surface Active Agents by HLB, J. Soc. Cosmet. CHEM. 1, 1949).

In einer speziellen Ausführungsform ist das nichtionische Tensid ausgewählt aus der Gruppe bestehend aus Polyoxyethylen(4)sorbitanmonolaurat, Polyoxyethylen(20)sorbitanmonopalmitat und Polyoxymethylen(20)sorbitanmonooleat.

Das nichtionische Tensid liegt in einer Menge von 1,0 bis 7,0 Gew.-%, besonders bevorzugt 1,5 bis 5,0 Gew.-% oder 1,0 bis 5,0 Gew.-%, bezogen auf das Gesamtgewicht der Mikroemulsion vor.

Komponente g)

Die erfindungsgemäße wässrige Mikroemulsion enthält die Komponente g), welche ein oder mehrere Salz(e) von Sulfobernsteinsäureester ist.

In einer bevorzugten Ausführungsform ist das Salz der Sulfobernsteinsäureester ein Alkalimetallsalz, insbesondere ein Natriumsalz. Das Salz der Sulfobernsteinsäureester agiert als anionisches Tensid. Insbesondere haben sich für die erfindungsgemäßen Mikroemulsionen Sulfobernsteinsäureestersalze herausgestellt, die $C_6$-$C_{12}$-Alkoholreste aufweisen. Das eingesetzte Sulfobernsteinsäureestersalz kann maßgeblich zur Stabilität der erfindungsgemäßen Mikroemulsion beitragen. Besonders bevorzugt sind die Salze der Sulfobernsteinsäureester, ausgewählt aus der Gruppe bestehend aus Diester von Sulfobernsteinsäure-Alkalisalz mit $C_6$-$C_{10}$-Alkoholen, Monoester von Sulfobernsteinsäure-Dialkalisalz mit $C_8$-$C_{12}$-Alkoholen und Monoester von Sulfobernsteinsäure-Dialkalisalz mit ethoxylieren $C_{10}$-$C_{14}$-Alkoholen.

In einer Ausführungsform liegt der Diester des Sulfobernsteinsäure-Alkalisalzes als ein Diester vor, der mindestens einen, vorzugsweise zwei ethoxylierte $C_{10}$-$C_{14}$-Atkohoireste aufweist.

Die Alkoholreste können linear oder verzweigt sein.

In einer besonders bevorzugten Ausführungsform ist das Salz der Sulfobernsteinsäureester das Natriumsalz des Sulfobernsteinsäure-bis-2-ethylhexylester.

Zur Einstellung einer optimalen erfindungsgemäßen wässrigen Mikroemulsion liegen die Salze der Sulfobernsteinsäureester in einer Menge von kleiner gleich 5 Gew. % bis 1 Gew. % bezogen auf das Gesamtgewicht der Formulierung; besonders bevorzugt 3 Gew. % oder 1 Gew. %.

Optional können weitere anionische Tenside, in der Mikroemulsion enthalten sein, insbesondere kleiner gleich 5 Gew. % bezogen auf das Gesamtgewicht der Formulierung, besonders bevorzugt kleiner gleich 3 Gew. % oder kleiner gleich 1 Gew. %.

In einer weiteren Ausgestaltung der Erfindung beträgt das Verhältnis von Komponente f) zur Summe der Komponenten c) plus g) plus f) etwa 0,1 bis 0,7, und besonders 0,2 bis 0,5, insbesondere 0,2, 0,3, 0,4, 0,5, 0,6 wobei jeder Zwischenwert angenommen werden kann.

Die erfindungsgemäßen Mikroemulsionen können als Reinigungsmittel im privaten wie auch im gewerblichen Bereich verwendet werden. Besonders vorteilhaft ist, dass die wässrigen Mikroemulsionen als Neutralreiniger eingesetzt werden können und somit die im Stand der Technik bekannten aggressiven alkalischen Reiniger zur Entfernung ölartiger Verschmutzungen, wie beispielsweise Farbreste, ersetzen. Die erfindungsgemäßen Mikroemulsionen weisen in einer Ausführungsform einen pH-Wert von 4 bis 11, vorzugsweise 5 bis 9 auf.

Die erfindungsgemäßen Mikroemulsionen können darüber hinaus weitere Additive aufweisen. Geeignete Additive sind beispielsweise Mono- Di- oder Triethylenglycolmonoalkylether oder -arylether wie Ethylenglycol-propylether, Ethylenglycol-butylether (Butylglycol), Ethylenglycol-hexylether, Diethylenglycolmethylether, Diethylenglycol-ethylether, Diethylenglycol-butylether (Butyldiglycol), Diethylenglycol-hexylether, Triethylenglycol-methylether, Triethylenglycol-ethylether, Triethylenglycol-butylether, Ethylenglycol-phenylether; Mono- Di- oder Tripropylenglycolmonoalkylether oder -arylether wie Propylenglycolmethylether, Propylenglycol-ethylether, Propylenglycol-n-propylether, Propylenglycolbutylether, Dipropylenglycol-methylether, Dipropylenglycol-n-propylether, Dipropylenglycol-butylether, Tripropylenglycol-methylether, Tripropylenglycol-butylether, Propylenglycol-phenylether.

Mono- Di- oder Triethylenglycoldialkylether, Mono- Di- oder Tripropylenglycoldialkylether wie Dipropylenglycoldimethylether
N-Alkylpyrrolidone, mit einem $C_1$-$C_{12}$-Alkylrest, z.B. N-Etylpyrrolidon, N-Octylpyrrolidon, N-Dodecylpyrrolidon.

Darüber hinaus können Biozide und/oder Farbstoffe sowie Rostschutz- und Antioxdanzmittel zugesetzt werden.

Die Additive können in Mengen von 0,01 bis 3, vorzugsweise 0,1 bis 1 Gew.-%, bezogen auf das Gesamtgewicht der Mikroemulsion, vorliegen.

Die erfindungsgemäßen Mikroemulsionen können in Form von Öl-in-Wasser oder Wasser-in-Öl Mikroemulsionen vorliegen. Bevorzugt liegen sie als bikontinuierliche Mikroemulsion vor. Bikontinuierliche Mikroemulsionen umfassen zwei Domänen, eine hydrophobe und eine hydrophile Domäne in Form von ausgedehnten nebeneinander liegenden und ineinander verschlungenen Domänen, an deren Grenzfläche stabilisierende grenzflächenaktive Tenside in einer monomolekularen Schicht angereichert sind. Mikroemulsionen bilden sich sehr leicht wegen der sehr niedrigen Grenzflächenspannung spontan, wenn die Einzelkomponenten Wasser, Öl und ein geeignetes grenzflächenaktives System vermischt werden. Da die Domänen in mindestens einer Dimension nur sehr geringe Ausdehnung in der Größenordnung von Nanometern haben, erscheinen Mikroemulsionen oft visuell transparent und sind je nach dem eingesetzten grenzflächenaktiven System in einem bestimmten Temperaturbereich thermodynamisch, d.h. zeitlich unbegrenzt, stabil. Wenn Mikroemulsionen geringe Tensidgehalte aufweisen, können sie auch trüb sein und sind trotzdem thermodynamisch stabil.

Die Mikroemulsion ist besonders stabil im Temperaturbereich von 10 bis 40°C, insbesondere 5 bis 60 °C.

In einer weiteren Ausführungsform sind die erfindungsgemäßen Mikroemulsionen stabil in einem Temperaturbereich < 5°C bis > 60°C.

In einer Ausführungsform kann die erfindungsgemäße Mikroemulsion eine Wasser-in-Öl- oder Öl-in-Wasser-Tröpfchenmikroemulsion sein, wobei Wassertröpfchen vom Öl oder Öltröpfchen vom Wasser umschlossen sind.

Besonders bevorzugt sind bikontinuierliche Mikroemulsionen.

Typischerweise beträgt der Gewichtsanteil von Esteröl (Komponente a)) im Esteröl-Wassergemisch 12 bis 45 Gew.-%, vorzugsweise 23 bis 38 Gew.-%, bezogen auf das Gesamtgewicht von Esteröl und Wasser in der Mikroemulsion.

Ein weiterer Gegenstand der vorliegenden Erfindung ist ein Reiniger, bestehend oder umfassend die erfindungsgemäße Mikroemulsion.

Ein weiterer Gegenstand der vorliegenden Erfindung ist die Verwendung der erfindungsgemäßen Mikroemulsion als Reinigungsmittel, insbesondere zur Entfernung ölartiger Verschmutzungen oder Harze und polymerartige Verschmutzungen.

In einer Ausführungsform des erfindungsgemäßen Reinigers beträgt der Anteil der Komponenten c) und d) plus Komponenten f) und g) weniger als 15 Gew.-%, insbesondere weniger als 12 Gew.-% oder weniger als 9 Gew.-% oder weniger als 7 Gew.-%, beispielsweise 2,5 bis 7 Gew.-%, jeweils bezogen auf das Gesamtgewicht des Reinigungsmittels. Dieser sehr geringe Tensidgehalt ermöglicht je nach Anwendungsgebiet die Herstellung von Produkten, die keiner Kennzeichnungspflicht hinsichtlich ihres Tensidgehalts unterliegen, was im Fall von Natriumoleat als Komponente c) und Ölsäure als Komponente d) vorteilhaft sogar gänzlich entfällt, da diese Substanzen kennzeichnungsfrei sind.

Der erfindungsgemäße Reiniger ist als Ersatz von organischen Lösungsmitteln besonders geeignet. Dies hat eine Reduktion der eingesetzten Menge organischer Lösungsmittel bis hin zum Verzicht auf aromatische Lösungsmittel zur Folge, welches vorteilhaft im Hinblick auf Arbeitsschutz und Umweltschutz ist. Außerdem weisen sowohl erfindungsgemäße Reiniger die darin befindlichen erfindungsgemäßen Mikroemulsionen erhöhte Flammpunkte gegenüber den darin enthaltenen organischen Phasen auf.

Ferner ist die Verwendung des erfindungsgemäßen Reinigers zum Abreinigen von Farben, insbesondere von angetrockneten oder trockenen Farben, Lacken und teerartigen Verbindungen und Klebstoffen, als Allzweckreiniger und Neutralreiniger im Haushalt, in der Industrie und gewerblichen Bereich möglich.

Eine Verwendung des erfindungsgemäßen Reinigers ist auch beim Abreinigen von Farben und Lacken auf wässriger und organischer Basis empfehlenswert, insbesondere zum Reinigen von Pinseln.

Der erfindungsgemäße Reiniger kann ferner zum Abreinigen von Farben, Lacken, Öl und/oder salzartigen Rückständen von Metall- und/oder Kunststoffoberflächen verwendet werden.

Eine Verwendung empfiehlt sich für empfindliche Oberflächen, insbesondere solche, die von organischen Lösungsmitteln oder sauren oder alkalischen Reinigern angegriffen werden, wie z.B. Aluminiumoberflächen. Der erfindungsgemäße Reiniger könnte somit beispielsweise organische Reinigungsmittel in vielen Anwendungsbereichen ersetzen.

In einer weiteren Ausführungsform der vorliegenden Erfindung wird die erfindungsgemäße Mikroemulsion zur Reinigung und/oder Entfernung von Verbindungen, ausgewählt aus der Gruppe bestehend aus Farben, Lacke, Fette, Öle, Harze, Bitumen, Teer, Klebereste, Dichtstoffe, Gummiabrieb, Kosmetik- und Schminkreste sowie Pyrolyseprodukte organischer Verbindungen, insbesondere zur Reinigung und/oder Entfernung von Verschmutzungen, deren organische Bestandteile polymerbasiert sind, beispielsweise Farben, Klebstoffe, Dichtmassen, Polymerschäume, wie beispielsweise Polyurethanschäume, verwendet.

Insbesondere geeignet ist die erfindungsgemäße Mikroemulsion zur Reinigung und/oder Entfernung angetrockneter Farben und Kleber.

In einer besonders bevorzugten Ausführungsform werden die erfindungsgemäßen Mikroemulsionen zur Reinigung von mit Farbstoffresten verunreinigten Werkzeugen, insbesondere Werkzeugen zum Auftragen von Farben, wie beispielsweise Pinsel, Farbrollen oder Farbsprühgeräte verwendet.

Es hat sich gezeigt, dass die erfindungsgemäßen Mikroemulsionen insbesondere bei polymerbasierten Anschmutzungen hervorragende Reinigungsleistungen zeigen.

Überraschend wurde ebenfalls gefunden, dass die erfindungsgemäßen Mikroemulsionen zur Entfernung von organischen Pyrolyseprodukten geeignet sind. In einer besonders bevorzugten Ausführungsform werden die erfindungsgemäßen Mikroemulsionen zur Reinigung von Backöfen, Kaminscheiben oder einem Grill verwendet.

Ein weiterer Gegenstand der vorliegenden Erfindung umfasst ein Verfahren zur Reinigung, umfassend die folgenden Schritte:

    a) Applizieren einer erfindungsgemäßen Mikroemulsion auf eine verunreinigte Oberfläche,

    b) gegebenenfalls Einwirkenlassen der Mikroemulsion, und

    c) Entfernen der Verunreinigung.

Es hat sich gezeigt, dass insbesondere beim Entfernen polymerbasierter Verunreinigungen eine Einwirkzeit von vorzugsweise 1 Minute bis zu 2 Tagen, weiter bevorzugt 5 Minuten bis 1 Stunde, beispielsweise 10 bis 30 Minuten das Ablösen der polymerbasierten Verunreinigung erheblich erleichtert.

Lange Einwirkzeiten sind mit den erfindungsgemäßen Mikroemulsionen problemlos möglich, da der Dampfdruck im Verhältnis zu konventionellen lösemittelbasierten Reinigern gering ist.

Im Weiteren wird die Erfindung an Hand von Ausführungsbeispielen näher erläutert, ohne dass es hierdurch zu einer Beschränkung der Erfindung kommen soll.

Ausführungsbeispiel:

Verwendete Komponenten:

-   Komponente b: Das verwendete Trinkwasser zeichnet sich durch folgende Charakteristika aus: pH = 8.0, Natrium 14 mg/l Kalium 2,7 mg/l, Calcium 60mg/l, Magnesium 14 mg/l, Nitrat 34.9 mg/l, Chlorid 46.1 mg/l.
-   Komponente a): Rapsmethylester (RME) Estisol 300 ist ein Esteröl der Firma Estichem.
-   Komponente g): Triumphnetzer ZSG (AOT, Sulfobernsteinsäure 1,4-bis-(2-ethylhexyl)ester, Natriumsalz ist ein anionisches Tensid der Firma Zschimmer und Schwarz; Wirkstoffgehalt 69%).
-   Komponente f): Uniperol EL ist ein ethoxyliertes Pflanzenöl der Firma BASF, Wirkstoffgehalt 100%.
-   Komponente e): Brij S100-PA-(SG) ist ein PEG-100 Stearylether der Firma Croda, Wirkstoffgehalt 100%.
-   Komponente c): Natriumoleat, technische Qualität wurde von Riedel-de Haen bezogen.
-   Komponente d): Ölsäure, technische Qualität, 90 % wurde von Aldrich bezogen.

Beispiel für ein Reinigungsmittel:

Triumphnetzter ZSG: 6,59 g
Brij S100-PA-(SG): 1,82 g
Dinatriumhyrogenphosphat-2 Hydrat: 2,63 g
Uniperol EL: 3,51 g
Rapsmethylester: 45,00 g
Natriumoleat: 2,31 g
Ölsäure: 3,69 g

Leitungswasser: 104,79 g

Alle Komponenten wurden bei Raumtemperatur vermischt. Unter Rühren bildete sich innerhalb kurzer Zeit eine Mikroemulsion aus. Das Temperaturstabilitätsfenster der Mikroemulsion lag zwischen 15 °C und 37 °C. Die Temperaturstabilität der Mikroemulsion wurde in einem thermostatisierten Gefäß und durch visuelle Begutachtung bestimmt. Die Temperatur-Phasengrenzen des einphasigen Mikroemulsionsbereichs konnten aufgrund der drastisch ansteigenden Trübheit bei Über- oder Unterschreiten des Stabilitätsfensters erkannt werden. In dem für das Beispiel angegebenen Stabilitätsbereich koexistiert die Mikroemulsionsphase teilweise mit lamellaren Phasen.

Reinigungsbeispiel:

Es wurden Reinigungstests mit öllöslichem Alkydharzlack (CWS Wertlack Specosal, Bunt-Emaillelack, aromatenfrei) durchgeführt, wobei Lack auf handelsübliche Malerpinsel aufgebracht wurde. Durch Ausdrücken und Umrühren in einem Gefäß, in dem sich das Reinigungsmittel befand, sowie anschließendem Ausspülen unter fließendem Wasser wurde die Reinigung durchgeführt. In allen Fällen wurde die Farbe im Wesentlichen vom Pinsel entfernt.

**Patentansprüche**

1. Wässrige Mikroemulsion umfassend

   a) einen oder mehrere flüssige Carbonsäureester einer Menge von 10-50 Gew.% und einer Kettenlänge von 6 - 22 C Atomen,
   b) ein oder mehrere wasserlösliche(s) Salz(e) mit einem oder mehreren Kationen, vorzugsweise ausgewählt aus der Gruppe bestehend aus Natrium, Kalium, Calcium, Magnesium und Ammonium einer Menge von 0,1-4 Gew.%,
   c) mindestens ein Salz einer Monocarbonsäure einer Kettenlänge von C6-C20,
   d) mindestens eine Monocarbonsäure einer Kettenlänge von C6-C20, und
   e) ein oder mehrere Booster(n), welcher aus mindestens einer wasserlöslichen Einheit bestehen, die mindestens an einem Kettenende mindestens eine hydrophobe Einheit besitzt und/oder eine hydrophobe Einheit als nicht-terminalen Substituenten besitzt und/oder mindestens eine hydrophobe Einheit besitzt, welche zwischen den wasserlöslichen Einheiten des Polymers eingebaut ist,
   wobei die Komponenten b) und c) verschieden sind und die Komponenten c) + d) + e) in einer Menge von 2-20 Gew.% vorliegen.
   f) ein ethoxyliertes Pflanzenöl und/oder ein ethoxylierter Sorbitanester einer menge von 1,0 - 7,0 Gew.%
   g) mindestens ein Salz von Sulfobernsteinsäureester einer Menge von 1,0-5,0 Gew.%.

2. Wässrige Mikroemulsion gemäß Anspruch 1, **dadurch gekennzeichnet, dass** der flüssige Carbonsäureester ausgewählt ist aus der Gruppe bestehend aus Ester aus einwertigem Alkohol und Mono- oder Dicarbonsäure und Ester aus zweiwertigem Alkohol und Monocarbonsäure, besonders bevorzugt sind die Ester einwertiger Alkohole mit Monocarbonsäuren.

3. Wässrige Mikroemulsion gemäß einem oder mehreren der vorangehenden Ansprüche, **dadurch gekennzeichnet, dass** der flüssige Carbonsäureester ein Ester aus einer $C_{10}$-$C_{22}$-Monocarbonsäure und Methanol, vorzugsweise Dodekansäuremethylester oder Rapsölmethylester, ist.

4. Wässrige Mikroemulsion gemäß einem oder mehreren der vorangehenden Ansprüche, **dadurch gekennzeichnet**, 20 bis 35 Gew.-%, jeweils bezogen auf das Gesamtgewicht der Mikroemulsion vorliegt.

5. Wässrige Mikroemulsion nach einem der Ansprüche 1 bis 4,
   **dadurch gekennzeichnet,**
   **dass** das Monocarbonsäuresalz Natriumoleat als Komponente c) ist und dass die Monocarbonsäure Ölsäure als Komponente d) ist und das die Monocarbonsäure Ölsäure als Komponente d) ist.

6. Wässrige Mikroemulsion gemäß einem oder mehreren der vorangehenden Ansprüche, **dadurch gekennzeichnet, dass**
   das Verhältnis von Komponente f) zur Summe der Komponenten c) plus g) plus f) etwa 0,1 bis 0,7, und besonders 0,2 bis 0,5 beträgt, wobei jeder Zwischenwert angenommen werden kann.

7. Wässrige Mikroemulsion gemäß einem oder mehreren der vorangehenden Ansprüche, **dadurch gekennzeichnet, dass** das Gewichtsverhältnis des flüssigen Carbonsäureesters (Komponente (a)) zur Summe der Komponenten (c), (d) (e) und f) 1,5 bis 10, bevorzugt 2,5 bis 8, insbesondere 3 bis 8 oder 4 bis 8 beträgt.

8. Wässrige Mikroemulsion gemäß einem oder mehreren der vorangehenden Ansprüche, **dadurch gekennzeichnet, dass** das Salz der Sulfobernsteinsäureester ausgewählt ist aus der Gruppe bestehend aus Diester von Sulfobernsteinsäure-Alkalisalz mit $C_6$-$C_{10}$-Alkoholen, Monoester von Sulfobernsteinsäure-Dialkalisalz mit $C_8$-$C_{12}$-Alkoholen und Monoester von Sulfobernsteinsäure-Dialkalisalz mit ethoxylierten $C_{10}$-$C_{14}$-Alkoholen.

**9.** Wässrige Mikroemulsion gemäß einem oder mehreren der vorangehenden Ansprüche, **dadurch gekennzeichnet, dass** das Salz der Sulfobernsteinsäureester das Natriumsalz des Sulfobernsteinsäure-bis-2-ethylhexylester ist.

**10.** Wässrige Mikroemulsion gemäß einem oder mehreren der vorangehenden Ansprüche, **dadurch gekennzeichnet, dass** Komponente c) plus Komponente g) in einer Menge von 1 bis 10 Gew.-%, bevorzugt in einer Menge von 2 bis 5 Gew.-%, jeweils bezogen auf das Gesamtgewicht der Mikroemulsion, vorliegt.

**11.** Wässrige Mikroemulsion gemäß einem oder mehreren der vorangehenden Ansprüche, **dadurch gekennzeichnet, dass** das nichtionische Tensid ein ethoxylierter Sorbitanmonoester mit einem gesättigten oder ungesättigtem $C_{12}$-$C_{18}$-Fettsäurerest ist.

**12.** Wässrige Mikroemulsion gemäß einem oder mehreren der vorangehenden Ansprüche, **dadurch gekennzeichnet, dass** das nichtionische Tensid ethoxyliertes Rizinusöl ist.

**13.** Wässrige Mikroemulsion gemäß einem oder mehreren der vorangehenden Ansprüche, **dadurch gekennzeichnet, dass** der Booster ein Alkoholethoxylat aus einem $C_8$-$C_{20}$ Alkohol mit 25 bis 500 Ethoxy-Gruppen, vorzugsweise 50 bis 200 Ethoxy-Gruppen, ist und dass der Booster e) in einer Menge von 3 bis 20 Gew.-%, bevorzugt 5 bis 15 Gew.-%, insbesondere 7 bis 15 Gew.-%, jeweils bezogen auf das Gesamtgewicht der Komponenten (c) (e) f) und g), vorliegt.

**14.** Wässrige Mikroemulsion gemäß einem oder mehreren der vorangehenden Ansprüche, **dadurch gekennzeichnet, dass** das Salz als Komponente b) ein Acetat, insbesondere Calciumacetat und/oder Magnesiumacetat ist.

**15.** Wässrige Mikroemulsion gemäß einem oder mehreren der vorangehenden Ansprüche, **dadurch gekennzeichnet, dass** die Summe der Komponenten (c), und (e) g) und f) in einer Menge von 2 bis 20 Gew.-%, bevorzugt 3 bis 15 Gew.-%, weiter bevorzugt 3 bis 10 Gew.-% und insbesondere 3 bis 8 Gew.-% oder 4 bis 8 Gew.-%, jeweils bezogen auf das Gesamtgewicht der Mikroemulsion, vorliegt.

**Claims**

**1.** Aqueous microemulsion comprising

a) one or several liquid carboxylic acid esters at an amount of 10-50% by weight and with a chain length of 6-22 C atoms,
b) one or several water-soluble salts with one or several cations, preferably selected from the group consisting of sodium, potassium, calcium, magnesium and ammonia, at an amount of 0.1-4% by weight,
c) at least one salt of a monocarboxylic acid with a chain length of C6-C20,
d) at least one monocarboxylic acid with a chain length of C6-C20 and
e) one or several booster(s), which consist of at least one water-soluble unit, which at least at one chain end has at least one hydrophobic unit and/or has a hydrophobic unit as a non-terminal substituent and/or has at least one hydrophobic unit, which is inserted between the water-soluble units of the polymer,
in which components b) and c) are different and components c) + d) + e) are present at an amount of 2-20% by weight,
f) an ethoxylated vegetable oil and/or an ethoxylated sorbitan ester at an amount of 1.0-7.0% by weight,
g) at least one salt of sulfosuccinic acid ester at an amount of 1.0-5.0% by weight.

**2.** Aqueous microemulsion according to claim 1, **characterised in that** the liquid caboxylic acid ester is selected from the group consisting of esters from monovalent alcohol and mono or dicarboxylic acid and esters from divalent alcohol and monocarboxylic acid, esters of monovalent alcohols with monocarboxylic acids are particularly preferred.

**3.** Aqueous microemulsion according to one or several of the previous claims, **characterised in that** the liquid carboxylic acid ester is an ester from a $C_{10}$-$C_{22}$ monocarboxylic acid and methanol, preferably dodecanoic acid methyl ester or rapeseed oil methyl ester.

**4.** Aqueous microemulsion according to one of several of the previous claims, **characterised in that** 20 to 35% by weight is present with reference to the total amount of the microemulsion.

**5.** Aqueous microemulsion according to one of claims 1 to 4,
**characterised in that**
the monocarboxylic acid salt is sodium oleate as component c) and the monocarboxylic acid is oleic acid as component d) and the monocarboxylic acid is oleic acid as component d).

**6.** Aqueous microemulsion according to one or several of the previous claims,
**characterised in that**
the ratio of component f) to the total of components c) plus g) plus f) is about 0.1 to 0.7 and particularly 0.2 to 0.5, in which any intermediate value may be accepted.

7. Aqueous microemulsion according to one or several of the previous claims, **characterised in that** the weight ratio of the liquid carboxylic acid ester (component (a)) to the total of components c), d), e) and f) is 1.5 to 10, preferably 2.5 to 8, particularly 3 to 8 or 4 to 8.

8. Aqueous microemulsion according to one or several of the previous claims, **characterised in that** the salt of the sulfosuccinic acid ester is selected from the group consisting of diesters of sulfosuccinic acid alkali salt with $C_6$-$C_{10}$ alcohols, monoesters of sulfosuccinic acid dialkali salt with $C_8$-$C_{12}$ alcohols and monoesters of sulfosuccinic acid dialkali salt with ethoxylated $C_{10}$-$C_{14}$ alcohols.

9. Aqueous microemulsion according to one or several of the previous claims, **characterised in that** the salt of the sulfosuccinic acid ester is the soldium salt of sulfosuccinic acid-bis-2-ethylhexyl ester.

10. Aqueous microemulsion according to one or several of the previous claims, **characterised in that** component c) plus component g) is present at an amount of 1 to 10% by weight, preferably at an amount of 2 to 5% by weight, with reference to the total weight of the microemulsion.

11. Aqueous microemulsion according to one or several of the previous claims, **characterised in that** the non-ionic tenside is an ethoxylated sorbitan monoester with a saturated or unsaturated $C_{12}$-$C_{18}$ fatty acid residue.

12. Aqueous microemulsion according to one or several of the previous claims, **characterised in that** the non-ionic tenside is ethoxylated castor oil.

13. Aqueous microemulsion according to one or several of the previous claims, **characterised in that** the booster is an alcohol ethoxylate from a $C_8$-$C_{20}$ alcohol with 25 to 500 ethoxy groups, preferably 50 to 200 ethoxy groups, and the booster e) is present at an amount of 3 to 20% by weight, preferably 5 to 15% by weight, particularly 7 to 15% by weight, with reference to the total weight of components c), e), f) and g).

14. Aqueous microemulsion according to one or several of the previous claims, **characterised in that** the salt as component b) is an acetate, particularly calcium acetate and/or magnesium acetate.

15. Aqueous microemulsion according to one or several of the previous claims, **characterised in that** the total of components c), and e), g) and f) is present at an amount of 2 to 20% by weight, preferably 3 to 15% by weight, more preferably 3 to 10% by weight and particularly 3 to 8% by weight or 4 to 8% by weight, with reference to the total weight of the microemulsion.

## Revendications

1. Microémulsion aqueuse, comprenant

a) un ou plusieurs carboxylates liquides d'une longueur de chaîne de 6 à 22 atomes de carbone en une quantité de 10 à 50% en poids,
b) un ou plusieurs sel(s) soluble(s) dans l'eau, ayant un ou plusieurs cations choisis de préférence dans le groupe constitué du sodium, du potassium, du calcium, du magnésium et de l'ammonium en une quantité de 0,1 à 4% en poids,
c) au moins un sel d'un acide monocarboxylique d'une longueur de chaîne de 6 à 20 atomes de carbone,
d) au moins un acide monocarboxylique d'une longueur de chaîne de 6 à 20 atomes de carbone et
e) un ou plusieurs booster(s) constitué(s) d'au moins une unité soluble dans l'eau, qui a, au moins à une extrémité de chaîne, au moins une unité hydrophobe et/ou qui a une unité hydrophobe comme substituants non terminaux et/ou qui a au moins une unité hydrophobe insérée entre les unités solubles dans l'eau du polymère, les constituants b) et c) étant différents et les constituants c) + d) + e) étant présents en une quantité de 2 à 20% en poids,
f) une huile végétale éthoxylée et/ou un ester de sorbitane éthoxylé en une quantité de 1,0 à 7,0% en poids,
g) au moins un sel d'un sulfosuccinate en une quantité de 1,0 à 5,0% en poids.

2. Microémulsion aqueuse suivant la revendication 1, **caractérisée en ce que** l'on choisit le carboxylate liquide dans le groupe constitué d'esters d'alcool monovalent et de mono ou diacide carboxylique et d'esters d'alcool bivalent, de monoacides carboxyliques, en préférant notamment les esters d'alcools monovalents avec des monoacides carboxyliques.

3. Microémulsion aqueuse suivant l'une ou plusieurs des revendications précédentes, **caractérisée en**

**ce que** le carboxylate liquide est un ester d'un monoacide carboxylique ayant de 10 à 22 atomes de carbone et du méthanol, en étant de préférence l'ester méthylique de l'acide dodécanoïque ou l'ester méthylique de l'huile de colza.

4. Microémulsion aqueuse suivant l'une ou plusieurs des revendications précédentes, **caractérisée en ce qu'**elle représente de 20 à 35% du poids total de la microémulsion.

5. Microémulsion aqueuse suivant l'une des revendications 1 à 4, **caractérisée en ce que** le sel d'acide monocarboxylique comme constituant c) est l'oléate de sodium et **en ce que** l'acide monocarboxylique comme constituant d) est l'acide oléique et **en ce que** l'acide monocarboxylique comme constituant d) est l'acide oléique.

6. Microémulsion aqueuse suivant l'une ou plusieurs des revendications précédentes, **caractérisée en ce que** le rapport du constituant f) à la somme des constituants c) + g) + f) va d'environ 0,1 à 0,7, et notamment de 0,2 à 0,5, en pouvant prendre toutes valeurs intermédiaires.

7. Microémulsion aqueuse suivant l'une ou plusieurs des revendications précédentes, **caractérisée en ce que** le rapport en poids du carboxylate liquide (constituant (a)) à la somme des constituants (c), (d), (e) et f) va de 1,5 à 10, de préférence de 2,5 à 8, notamment de 3 à 8 ou de 4 à 8.

8. Microémulsion aqueuse suivant l'une ou plusieurs des revendications précédentes, **caractérisée en ce que** le sel du sulfosuccinate est choisi dans le groupe constitué de diesters de sel de métal alcalin de l'acide sulfosuccinique avec des alcools ayant de 8 à 10 atomes de carbone, de monoesters de sel de dimétal alcalin de l'acide sulfosuccinique avec des alcools ayant de 8 à 12 atomes de carbone et de monoesters de sel de dimétal alcalin de l'acide sulfosuccinique avec des alcools éthoxylés ayant de 10 à 14 atomes de carbone.

9. Microémulsion aqueuse suivant l'une ou plusieurs des revendications précédentes, **caractérisée en ce que** le sel du sulfosuccinate est le sel de sodium, de l'ester bis-2-éthylhexylique de l'acide sulfosuccinique.

10. Microémulsion aqueuse suivant l'une ou plusieurs des revendications précédentes, **caractérisée en ce que** le constituant c) plus le constituant g) représentent de 1 à 10%, de préférence de 2 à 5% du poids total de la microémulsion.

11. Microémulsion aqueuse suivant l'une ou plusieurs des revendications précédentes, **caractérisée en ce que** l'agent tensioactif non ionique est un monoester de sorbitane éthoxylé ayant un reste d'acide gras saturé ou non saturé de 12 à 18 atomes de carbone.

12. Microémulsion aqueuse suivant l'une ou plusieurs des revendications précédentes, **caractérisée en ce que** l'agent tensioactif non ionique est de l'huile de ricin éthoxylée.

13. Microémulsion aqueuse suivant l'une ou plusieurs des revendications précédentes, **caractérisée en ce que** le booster est un éthoxylate d'alcool composé d'un alcool ayant de 8 à 20 atomes de carbone avec de 25 à 500 groupes éthoxy, de préférence de 50 à 200 groupes éthoxy, et **en ce que** le booster e) représente de 3 à 20%, de préférence de 5 à 15%, notamment de 7 à 15% du poids total des constituants (c) (e) f) et g).

14. Microémulsion aqueuse suivant l'une ou plusieurs des revendications précédentes, **caractérisée en ce que** le sel comme constituant b) est un acétate, notamment l'acétate de calcium et/ou l'acétate de magnésium.

15. Microémulsion aqueuse suivant l'une ou plusieurs des revendications précédentes, **caractérisée en ce que** la somme des constituants (c) et (e) g) et f) représente de 2 à 20%, de préférence de 3 à 15%, d'une manière encore plus préférée de 3 à 10% et notamment de 3 à 8% ou de 4 à 8% du poids total de la microémulsion.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005049765 A1
- WO 2008132202 A1
- DE 102005049765
- US 6165962 A
- US 20090093390 A
- US 7018969 B
- US 20050130869 A
- WO 2006004721 A
- US 20040038847 A
- WO 0052128 A
- EP 1780259 A
- WO 2013139842 A1
- DE 19839054

**In der Beschreibung aufgeführte Nicht-Patentliteratur**

- Classification of Surface Active Agents. **GRIFFIN, W.C.** J. Soc. Cosmet. CHEM. HLB, 1949, vol. 1